(19) Europäisches Patentamt
European Patent Office
Office européen des brevets

(11) **EP 2 387 175 B1**

(12) **FASCICULE DE BREVET EUROPEEN**

(45) Date de publication et mention
de la délivrance du brevet:
**12.12.2012 Bulletin 2012/50**

(51) Int Cl.:
*H04L 1/16* (2006.01)   *H04L 1/18* (2006.01)
*H04L 9/30* (2006.01)   *H04L 29/06* (2006.01)
*H04L 9/08* (2006.01)

(21) Numéro de dépôt: **11163938.1**

(22) Date de dépôt: **27.04.2011**

(54) **Méthode de transmission de paquets sécurisée par chiffrement et fiabilisée par l'utilisation d'un mécanisme de retransmission automatique pour système de télécommunication sans fil.**

Gesicherte Übertragungsmethode von Datenpaketen für drahtloses Telekommunikationssystem mit Verschlüsselung und automatischen Wiederholungsaufforderungsprotokolls (HARQ).

Packet-transmission method for a wireless telecommunication system using ciphering and HARQ mechanisms.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.05.2010 FR 1001986**

(43) Date de publication de la demande:
**16.11.2011 Bulletin 2011/46**

(73) Titulaire: **Commissariat à l'Énergie Atomique et aux Énergies Alternatives**
**75015 Paris (FR)**

(72) Inventeur: **Hennebert, Christine**
**38700 La Tronche (FR)**

(74) Mandataire: **Augarde, Eric**
**BREVALEX**
**56 Boulevard de l'Embouchure,**
**Bât. B**
**B.P. 27519**
**31075 Toulouse Cedex 2 (FR)**

(56) Documents cités:
**US-A1- 2007 112 972**

• **XIAOJUN TANG ET AL: "On the Throughput of Secure Hybrid-ARQ Protocols for Gaussian Block-Fading Channels", IEEE TRANSACTIONS ON INFORMATION THEORY, IEEE, US, vol. 55, no. 4, 1 avril 2009 (2009-04-01), pages 1575-1591, XP011253818, ISSN: 0018-9448**
• **ALABBADI M ET AL: "Integrated security and error control for communication networks using the McEliece cryptosystem", SECURITY TECHNOLOGY, 1992. CRIME COUNTERMEASURES, PROCEEDINGS. INSTITUTE OF ELECTRICAL AND ELECTRONICS ENGINEERS 1992 INTERNATIONAL CARNAHAN CONFERENCE ON ATLANTA, GA, USA 14-16 OCT. 1992, NEW YORK, NY, USA,IEEE, US, 14 octobre 1992 (1992-10-14), pages 172-178, XP010060284, DOI: DOI:10.1109/CCST. 1992.253739 ISBN: 978-0-7803-0568-7**

## Description

## DOMAINE TECHNIQUE

La présente invention concerne le domaine des systèmes de télécommunication sans fil et plus particulièrement celui des systèmes de télécommunication sécurisés.

## ÉTAT DE LA TECHNIQUE ANTÉRIEURE

Le protocole HARQ (*Hybrid Automatic Repeat reQuest*) est un mécanisme bien connu de requête de retransmission permettant de combattre les évanouissements sur un canal (*channel fading*) entre un émetteur et un récepteur. Ce protocole est notamment utilisé dans les systèmes 3GPP mettant en oeuvre la technologie HSPA (*High Speed Packet Access*) et est envisagé dans les systèmes mobiles de quatrième génération, dans le cadre du projet LTE (*Long Term Evolution*).

Il existe actuellement plusieurs versions de protocole HARQ.

La version la plus simple, dénommée HARQ Type I, combine les avantages de la correction d'erreurs ou FEC (*Forward Error Correction*) et ceux du protocole ARQ classique en encodant un bloc de données d'information avec un code de détection d'erreurs (CRC) et un code de correction d'erreurs (ECC). S'il est détecté un nombre d'erreurs telles que le code ECC ne puisse les corriger, une requête de retransmission du bloc est envoyée à l'émetteur et une seconde tentative de transmission a lieu. En pratique le bloc erroné n'est pas supprimé mais est stocké dans un buffer pour être combiné (*Chase combining*) avec le bloc reçu à la seconde tentative. Le résultat de la combinaison est soumis au décodeur.

Une seconde version de protocole HARQ, dénommée HARQ Type II ou IR HARQ (*Incremental Redundancy HARQ*) permet d'éviter des transmissions redondantes. Selon cette version, lors de la première transmission du bloc, le code est poinçonné de telle sorte que peu de symboles de redondance soient transmis. Si le bloc reçu lors de la première transmission se révèle erroné et ne peut être corrigé à l'aide des symboles de redondance disponibles, des symboles de redondance supplémentaires, éliminés lors du poinçonnage, sont transmis en réponse à la première requête de retransmission. Le processus peut se répéter, les symboles de redondance étant transmis de manière incrémentale, au fur et à mesure des demandes de retransmission, tant que le bloc erroné ne peut être corrigé.

Le protocole HARQ ne présente en lui-même aucune mesure permettant de sécuriser les données transmises vis-à-vis d'une éventuelle interception par un récepteur espion. Diverses méthodes de chiffrement (ou d'encryptage) faisant appel à une clé publique ou bien à une clé secrète sont connues de l'état de la technique. Toutefois, ce chiffrement est généralement appliqué à un niveau applicatif, en amont de la mise en oeuvre du protocole HARQ. Or, ce protocole, qu'il soit de type I ou II, accroît, par le biais des retransmissions successives, la redondance des données transmises et par conséquent la probabilité que la clé utilisée pour le déchiffrement puisse être craquée.

Il a été notamment proposé dans l'article de X. Tang et al. intitulé « On the throughput of secure hybrid-ARQ protocols for gaussian block-fading channels » publié dans IEEE Trans. on Information Theory, Vol. 5, N° 4, Avril 2009, pp. 1575-1591, d'utiliser une famille de codes de Wyner pour chiffrer les paquets à transmettre sur une liaison utilisant un protocole HARQ de type II. Cette famille de codes présente l'avantage d'être compatible avec différents taux de poinçonnage, autrement dit avec la transmission d'incréments de redondance.

La méthode de transmission sécurisée précitée suppose toutefois l'envoi d'une quantité importante d'informations auxiliaires au récepteur pour décoder les paquets transmis. En outre, elle est relativement complexe à mettre en oeuvre, de sorte qu'elle se prête mal à des applications de type « temps-réel » et ne permet pas de respecter des contraintes de faible latence. Enfin, elle ne fonctionne correctement que dans la mesure où la qualité du canal entre l'émetteur et le récepteur est meilleure que celle entre l'émetteur et un récepteur espion.

La demande de brevet US2007/0112972 décrit une méthode de chiffrement symétrique de blocs de données utilisant un mécanisme de retransmission de segment constitué d'une pluralité de tels blocs.

L'article de M. Alabaddi et al., intitulé « Integrated security and error control for communication networks using McEliece cryptosystem », publié dans Security Technology, 1992 Crime countermeasures, Proc. of EEE Int'l Carnahan Conf., 1992, pages 172-178, décrit une méthode de chiffrement à clé publique capable de supporter un mode de transmission HARQ.

De manière générale, le but de la présente invention est de proposer une méthode de transmission sécurisée de paquets sur une liaison sans fil entre un émetteur et un récepteur qui ne présente pas les inconvénients de l'état de la technique.

En particulier, un but de la présente invention est de proposer une méthode de transmission de paquets sécurisée utilisant un protocole HARQ de type II, qui soit simple à mettre en oeuvre, compatible avec des applications de type « temps-réel », tout en présentant un niveau de confidentialité très élevé.

## EXPOSÉ DE L'INVENTION

La présente invention est définie par une méthode de transmission sécurisée de paquets de données selon la revendication 1. Des modes de réalisation avantageux sont définis dans les revendications dépendantes.

## BRÈVE DESCRIPTION DES DESSINS

D'autres caractéristiques et avantages de l'invention apparaîtront à la lecture d'un mode de réalisation préférentiel de l'invention décrit en référence aux figures jointes parmi lesquelles :

La Fig. 1 illustre schématiquement une première méthode de transmission de paquets sécurisée ;

La Fig. 2 illustre schématiquement une seconde méthode de transmission de paquets sécurisée ;

La Fig. 3 illustre schématiquement une méthode de transmission de paquets sécurisée, selon un premier mode de réalisation de l'invention ;

La Fig. 4 illustre schématiquement une méthode de transmission de paquets sécurisée, selon un second mode de réalisation de l'invention ;

La Fig. 5 illustre schématiquement la structure d'un émetteur permettant de mettre en oeuvre la première ou la seconde méthode de transmission de paquets sécurisée ;

La Fig. 6 illustre schématiquement la structure d'un récepteur permettant de mettre en oeuvre la première ou la seconde méthode de transmission de paquets sécurisée ;

La Fig. 7 illustre schématiquement la structure d'un émetteur permettant de mettre en oeuvre la méthode de transmission de paquets sécurisée selon le premier ou le second mode de réalisation de l'invention ;

La Fig. 8 illustre schématiquement la structure d'un récepteur permettant de mettre en oeuvre la méthode de transmission de paquets sécurisée selon le premier ou le second mode de réalisation de l'invention.

## EXPOSÉ DÉTAILLÉ DE MODES DE RÉALISATION PARTICULIERS

Nous considérerons dans la suite un système de télécommunication sans fil et plus particulièrement une liaison sans fil entre un émetteur et un récepteur utilisant une transmission par paquets.

L'émetteur peut être un terminal mobile et le récepteur une station de base (liaison montante). Alternativement, l'émetteur peut être une station de base et le récepteur un terminal mobile (liaison descendante).

Nous supposerons également que les paquets transmis sont préalablement codés à l'aide d'un code de correction d'erreur ECC (*Error Correcting Code)* et, le cas échéant, un code de contrôle de parité CRC (*Cyclic Redundancy Check*) .

Les paquets ainsi codés sont ensuite chiffrés au moyen d'un algorithme de chiffrement symétrique (à clé secrète) ou asymétrique (à clé publique) comme détaillé plus loin.

Dans tous les cas, le récepteur peut déterminer si un paquet reçu est intègre ou erroné.

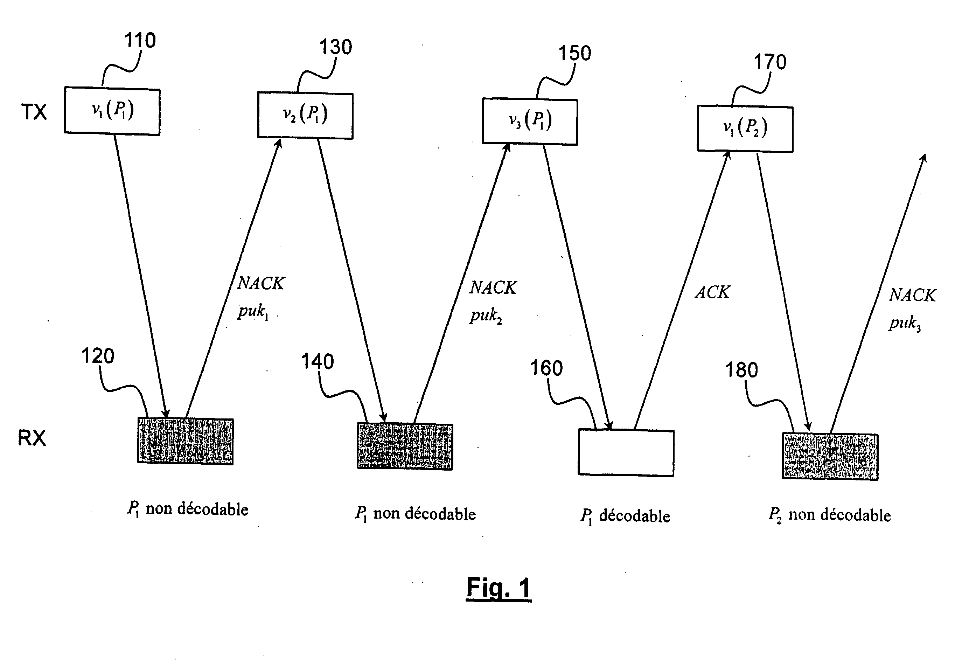

La première méthode de transmission met en oeuvre une pluralité de transmissions successives d'un paquet comme illustré en Fig. 1.

Plus précisément, lors d'une première étape 110, l'émetteur transmet une première version de ce paquet, $v_1(P_1)$, ayant pour particularité de ne pouvoir être décodée par le récepteur. Par version d'un paquet, on entend un sous-ensemble des symboles de ce paquet. Par exemple, si le paquet est constitué par une séquence de symboles, un paquet poinçonné, c'est-à-dire un paquet pour lequel certains symboles de la séquence ont été supprimés, sera considéré comme une version de ce paquet.

Typiquement, la première version du paquet, non décodable par le récepteur, est obtenue par un codage de correction d'erreur suivi par un poinçonnage du paquet encodé, avec un taux de poinçonnage excédant les capacités de correction du code.

Ainsi, par exemple, si un paquet est codé à l'aide d'un code de Reed-Solomon *(n,k)*, le paquet codé puis poinçonné de manière à ce que $s > n - k$ symboles soient effacés, constituera une version non décodable du paquet en question.

Selon un autre exemple, si un paquet est codé à l'aide d'un turbocodeur constitué par la concaténation parallèle de plusieurs codeurs récursifs systématiques, le paquet ainsi codé dans lequel la partie systématique aura été entièrement poinçonnée constituera une version non décodable de ce paquet.

Bien entendu, d'autres exemples de version non décodable d'un paquet peuvent être envisagés sans pour autant sortir du cadre de la première méthode.

A l'étape 120, le récepteur effectue un décodage de la première version du paquet. Ce décodage se solde nécessairement par un échec puisque cette première version ne permet pas de reconstituer l'ensemble des symboles d'information contenus dans le paquet. Le récepteur peut néanmoins stocker cette première version dans un buffer de réception pour l'exploiter ultérieurement comme détaillé plus loin. Les échecs de décodage ont été représentés en grisé, les succès en clair.

On comprendra qu'un récepteur espion qui intercepterait cette première version ne pourrait pas davantage décoder le paquet. Pour garantir un haut niveau de confidentialité, on utilisera avantageusement un fort taux de poinçonnage au niveau de l'émetteur.

Suite à l'échec du décodage, le récepteur renvoie un accusé de réception négatif, NACK, codé sur un bit.

Le récepteur génère également une première paire de clés $(prk_1, puk_1)$ constituée d'une première clé privée, $prk_1$, et d'une première clé publique correspon-

dante, $puk_1$, d'un algorithme de chiffrement asymétrique connu en soi, par exemple, d'un l'algorithme exploitant les propriétés des courbes elliptiques. La première clé publique, $puk_1$, est envoyée à l'émetteur avec l'accusé de réception négatif, NACK.

Sur réception du signal NACK, l'émetteur transmet, à l'étape 130, une seconde version du paquet, $v_2(P_1)$, après l'avoir chiffrée à l'aide de la première clé publique, $puk_1$.

La seconde version du paquet est obtenue par un second poinçonnage du paquet. Elle est avantageusement constituée de symboles éliminés par la première étape de poinçonnage. Cette seconde version peut également comprendre en sus, certains des symboles déjà présents dans la première version du paquet.

A l'étape 140, le récepteur reçoit la seconde version du paquet chiffrée par la première clé publique, $puk_1$, et la déchiffre à l'aide de la première clé privée, $prk_1$.

Il combine ensuite les première et seconde versions du paquet pour obtenir une première version combinée de ce paquet.

Lorsque la seconde version est uniquement constituée de symboles éliminés par la première étape de poinçonnage, la combinaison consiste à insérer en lieu et place des symboles éliminés, les symboles de la seconde version. Il s'agit alors à proprement parler d'un dépoinçonnage du paquet. Lorsque certains symboles de la seconde version étaient déjà présents dans la première version, la combinaison est de type *Chase* (*Chase Combining*), autrement dit la combinaison peut être alors une somme des valeurs souples des symboles présents dans les deux versions. De manière générale, on comprendra que la combinaison pourra à la fois comprendre une étape de dépoinçonnage (insertion ou concaténation de symboles éliminés) et une étape de sommation de valeurs souples pour les symboles présents dans les deux versions.

Le récepteur effectue ensuite une seconde tentative de décodage de la première version combinée.

En cas de succès, c'est-à-dire en absence d'erreur, le récepteur renvoie à l'émetteur un accusé de réception positif, ACK. L'émetteur est alors prêt à transmettre un nouveau paquet.

En cas de nouvel échec, le processus précédent est itéré, comme illustré en Fig. 1, autrement dit une seconde paire de clés est générée, constituée d'une seconde clé privée, $prk_2$, et d'une seconde clé publique correspondante, $puk_2$. Le récepteur renvoie à l'émetteur un accusé de réception négatif, NACK, ainsi que la seconde clé publique, $puk_2$.

Sur réception du signal, NACK, l'émetteur transmet en 150 une troisième version du paquet, $v_3(P_1)$, obtenue au moyen d'un troisième poinçonnage du paquet. La troisième version est avantageusement constituée de symboles éliminés par la première et/ou la seconde étape de poinçonnage. Enfin, cette troisième version, comme la précédente, n'est pas transmise en clair mais est préalablement chiffrée, cette fois au moyen de la seconde clé publique, $puk_2$.

Le récepteur déchiffre en 160 cette troisième version, combine la version ainsi déchiffrée à la première et/ou la seconde version stockée(s) pour obtenir une seconde version combinée, et effectue un décodage de la seconde version combinée. On notera que cette combinaison est effectuée selon le même principe que précédemment.

Le processus de retransmission se poursuit jusqu'à ce que l'émetteur reçoive un accusé de réception positif, ACK, ou qu'un nombre maximal autorisé de versions successives du même paquet aient été transmises, ou encore que tous les symboles du paquet aient déjà été transmis.

On comprendra que le changement de clé de chiffrement à chaque transmission d'une nouvelle version du paquet garantit un très haut degré de confidentialité sur la liaison.

Selon une variante, une nouvelle clé de chiffrement peut n'être générée que toutes les $Q \geq 2$ échecs de décodage. Autrement dit, le récepteur qui ne parvient pas à décoder le paquet ne crée une nouvelle paire de clés publique et privée qu'une fois sur Q.

Dès lors que l'émetteur a reçu un acquittement de bonne réception, ACK, il peut transmettre le paquet suivant, présent dans le buffer d'émission. Ce mode de fonctionnement du protocole HARQ est connu sous le nom de *stop-and-wait.* Autrement dit, l'émetteur attend d'être certain que le paquet en cours est bien reçu avant de transmettre le suivant.

Alternativement, il est possible d'utiliser le mode *Go-Back-N ARQ* ou le mode selective *repeat ARQ,* de manière connue en soi. On rappelle que dans ces modes de fonctionnement l'émetteur n'attend pas d'avoir reçu un accusé de réception d'un paquet pour transmettre le paquet suivant.

Plus précisément, dans le mode *Go-Back-N ARQ* l'émetteur utilise une fenêtre temporelle glissante ayant pour taille N paquets. La taille $N$ définit le nombre de paquets que l'émetteur peut transmettre sans recevoir d'accusé de réception, ACK. Si l'émetteur n'a pas reçu un accusé de réception après $N$ paquets, il reprend la transmission à partir du paquet pour lequel il n'a pas reçu d'accusé de réception, ACK.

Le mode *« selective repeat ARQ »* diffère du précédent en ce que le récepteur transmet un accusé de réception positif, ACK, pour chaque paquet correctement décodé, même après avoir reçu un paquet erroné. Si l'émetteur reçoit un signal NACK, il retransmet le paquet erroné à la volée puis reprend sa transmission là où il l'avait interrompue.

Alternativement encore, il est possible d'utiliser un mode « N-Stop-and-Wait » de manière connue en soi. On rappelle qu'un tel mode permet d'utiliser avantageusement la latence du mode « Stop-and-Wait », entre l'émission d'un paquet et la réception de son acquittement, en envoyant de nouveaux paquets dans cet intervalle de temps. Chaque paquet est traité indépendamment des autres.

Il est important de noter que les modes « *Go-Back-N ARQ* », « *selective repeat ARQ* » et « *N-Stop-and-Wait* » peuvent être utilisés en combinaison dans le cadre de la première méthode. Pour des raisons de concision et sans préjudice de généralisation, seul le mode *selective repeat ARQ* sera décrit ci-après.

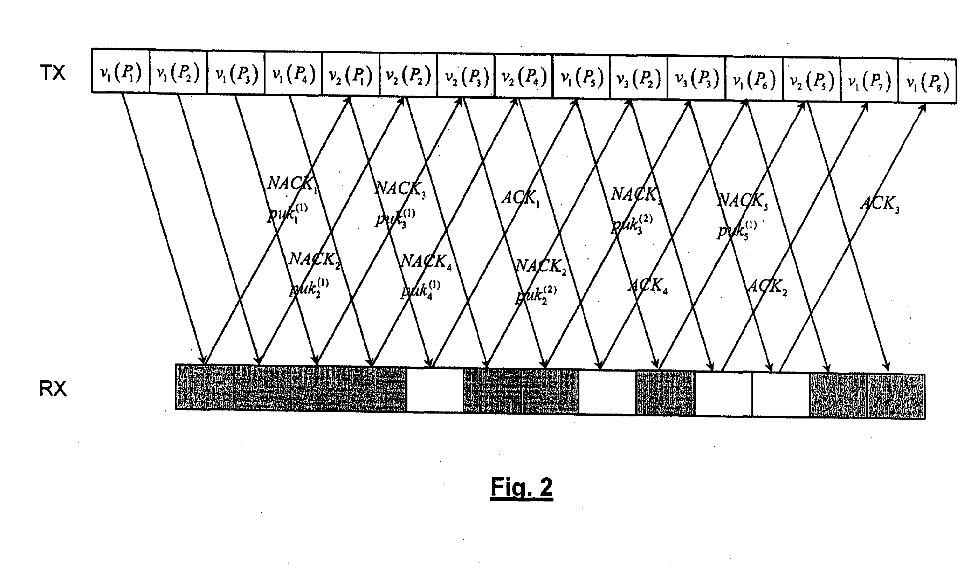

La Fig. 2 représente une seconde méthode de transmission par paquets sécurisée. Plus précisément, ce mode de réalisation utilise un protocole de retransmission *selective repeat ARQ*, en prenant à titre d'illustration $N = 4$.

On remarque que, dans une première étape, l'émetteur transmet des premières versions de paquets, $v_1(P_1), v_1(P_2), v_1(P_3), v_1(P_4)$ sans attendre de recevoir les accusés de réception correspondants. Les premières versions $v_1(P_1), v_1(P_2), v_1(P_3), v_1(P_4)$ n'étant pas décodables, le récepteur renvoie les accusés de réception négatifs $NACK_1, ..., NACK_4$ à l'émetteur ainsi que les clés publiques $puk_1^{(1)}$, $puk_2^{(1)}$, $puk_3^{(1)}$, $puk_4^{(1)}$.

L'émetteur reprend alors la transmission au début de la fenêtre temporelle avec la transmission des secondes versions $v_2(P_1), v_2(P_2), v_2(P_3), v_2(P_4)$, codées respectivement à l'aide des clés publiques $puk_1^{(1)}$, $puk_2^{(1)}$, $puk_3^{(1)}$, $puk_4^{(1)}$, sans attendre les accusés de réception correspondants. Le récepteur décode les secondes versions des paquets à l'aide des clés privées correspondantes $prk_1^{(1)}$, $prk_2^{(1)}$, $prk_3^{(1)}$, $prk_4^{(1)}$.

Pour chacun des quatre paquets, le récepteur combine les première et seconde versions et tente un nouveau décodage de la combinaison obtenue. Dans le cas illustré, le décodage se solde par un échec pour les paquets $P_2$ et $P_3$, et par un succès pour les paquets $P_1$ et $P_4$. Le récepteur renvoie par conséquent $ACK_1$, $NACK_2$ avec la nouvelle clé publique $puk_2^{(2)}$, $NACK_3$ avec la nouvelle clé publique $puk_3^{(2)}$, et $ACK_4$.

Lorsque l'émetteur reçoit un accusé de réception positif, il passe à un nouveau paquet et en transmet une première version. Ainsi, après $ACK_1$, l'émetteur transmet le paquet $P_5$ et après $ACK_4$, il transmet le paquet $P_6$.

A l'inverse lorsque l'émetteur reçoit un accusé de réception négatif, il transmet à la volée une nouvelle version du paquet correspondant. Ainsi, après $NACK_2$, l'émetteur transmet une troisième version, $v_3(P_2)$ du paquet $P_2$, chiffrée à l'aide de la clé $puk_2^{(2)}$. De même, après $NACK_3$, l'émetteur transmet une troisième version du paquet, $v_3(P_3)$, chiffrée avec la clé $puk_3^{(2)}$.

Dans l'exemple illustré, un nouveau couple de clés publique et privée est généré à chaque échec de décodage d'un paquet. Toutefois, cette génération peut n'intervenir qu'après $Q$ échecs successifs. Par exemple, on pourra prendre $Q = N = 4$. Dans ce cas, on remarquera que les secondes versions des paquets sont chiffrées avec la même clé publique. Le nombre $Q$ d'échecs entre deux générations de clés peut encore résulter d'un tirage aléatoire.

La génération du couple de clés privée et publique au niveau du récepteur utilise un germe qui peut être avantageusement réinitialisé à chaque mise en route et/ou à chaque établissement d'une nouvelle communication. Par exemple, le germe peut être obtenu à l'aide d'une opération XOR entre le code PIN de l'utilisateur et l'heure de mise en route/d'établissement de la communication, exprimée selon un format donné. Ce germe peut subir en outre un traitement par une fonction non-inversible de manière à prévenir qu'un espion puisse remonter à ce dernier à partir de la simple observation des clés générées. Par exemple, ce traitement pourra consister en une opération arithmétique complexe suivie du modulo par rapport à un nombre premier. Bien entendu, d'autres exemples peuvent être envisagés sans pour autant sortir du cadre de la seconde méthode.

Le résultat de ce traitement sert de clé privée au récepteur. La clé publique correspondante est générée de manière connue en soi, par exemple à l'aide de l'algorithme RSA, ou d'un algorithme de cryptographie sur courbes elliptiques, présentant l'avantage de produire des clés plus courtes.

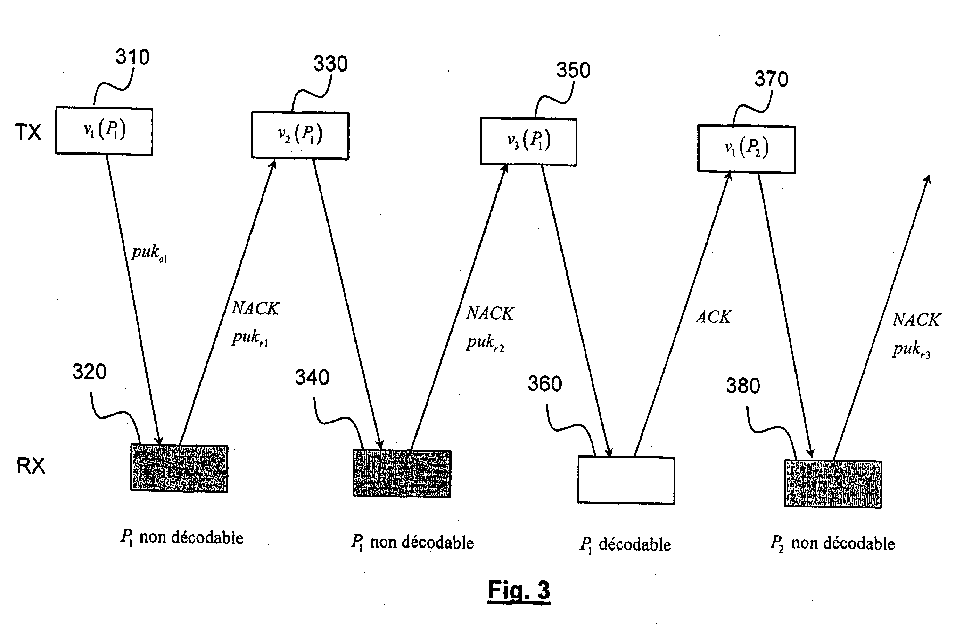

La Fig. 3 illustre schématiquement une méthode de transmission de paquets sécurisée, selon un premier mode de réalisation de l'invention. Ce mode de réalisation diffère de la première méthode en ce que l'on utilise un algorithme de chiffrement par flot en lieu et place d'un algorithme de chiffrement asymétrique.

On rappelle qu'un chiffrement par flot est un type particulier de chiffrement symétrique, autrement dit de chiffrement utilisant une clé secrète partagée entre l'émetteur et le récepteur (Bob et Alice). Plus précisément, un chiffrement par flot effectue généralement une combinaison (par exemple au moyen d'un OU exclusif : XOR) entre un flot binaire pseudo-aléatoire de chiffrement et les bits du message à chiffrer. Le flot binaire pseudo-aléatoire est généré à l'aide de la clé secrète par exemple en initialisant à l'aide de cette clé le contenu d'un registre à décalage rebouclé sur lui-même. Parmi les algorithmes de chiffrement par flot, on pourra notamment utiliser l'algorithme RC4 ou l'algorithme Py.

La clé secrète, dite également clé de session, est avantageusement générée à l'aide d'une paire de clés asymétriques de l'émetteur et d'une paire de clés asymétriques $(puk_r, prk_r)$ du récepteur. Pour ce faire, l'émetteur génère une paire de clés asymétriques ($puk_e$,

$prk_e$) et transmet la clé publique $puk_e$ de cette paire au récepteur. Réciproquement, le récepteur génère également une paire de clés asymétriques ($puk_r,prk_r$) et transmet la clé publique de cette paire à l'émetteur.

Chacun de l'émetteur et du récepteur peut alors générer la clé secrète $K_s$ à partir de la propriété :

$$K_s = puk_e.prk_r = puk_r.prk_e$$

le produit $puk_r.prk_c$ étant calculé par l'émetteur et le produit $puk_e.prk_r$ étant calculé par le récepteur.

Revenant à la Fig. 3, l'émetteur transmet en 310 une première version non décodable du paquet $P_1$, $v_1$($P_1$), obtenu par poinçonnage comme dans la première méthode.

Toutefois à la différence de la première méthode, l'émetteur transmet, avec cette première version, la clé publique $puk_e$ d'une paire de clés asymétriques ($puk_e$, $prk_e$) qu'il a préalablement générée pour cette session. Selon une variante non représentée, la clé publique $puk_e$ a été transmise au récepteur dans une étape préalable, par exemple lors de l'initialisation de la transmission.

A l'étape 320, le récepteur détermine que la première version du paquet est non décodable et renvoie un accusé de réception négatif, NACK, ainsi que la clé publique $puk_{r1}$ d'une première paire de clés asymétriques qu'il a préalablement générée pour cette session.

Le récepteur calcule en 320 la clé secrète de session par $K_{s1} = puk_e.prk_{r1}$.

Sur réception du signal NACK, l'émetteur transmet à l'étape 320, une seconde version du paquet, $v_2$($P_1$), après l'avoir chiffrée à l'aide de la clé secrète de session. Pour ce faire, l'émetteur calcule préalablement cette clé par $K_{s1} = prk_e.puk_{r1}$.

La seconde version du paquet est obtenue par un second poinçonnage du paquet. Elle est avantageusement constituée de symboles éliminés par la première étape de poinçonnage. Cette seconde version peut également comprendre, en sus, certains des symboles déjà présents dans la première version du paquet.

La seconde version du paquet ainsi chiffrée est déchiffrée par le récepteur au moyen de la clé secrète de session en 340.

Il combine ensuite les première et seconde versions du paquet pour obtenir une première version combinée de ce paquet.

Les différentes variantes envisagées pour la première méthode (dépoinçonnage avec ou sans combinaison de type *Chase Combining*) trouvent ici également application.

Le récepteur effectue ensuite une seconde tentative de décodage de la version ainsi combinée.

En cas de succès, c'est-à-dire en absence d'erreur, le récepteur renvoie à l'émetteur un accusé de réception positif, ACK. L'émetteur est alors prêt à transmettre un nouveau paquet.

En cas de nouvel échec, le processus précédent est itéré, comme illustré en 340, autrement dit une seconde paire de clés asymétriques est générée par le récepteur, constituée d'une seconde clé privée, $prk_{r2}$, et d'une seconde clé publique correspondante, $puk_{r2}$. Le récepteur renvoie à l'émetteur un accusé de réception négatif, NACK, ainsi que la seconde clé publique, $puk_{r2}$. Il calcule également en 340 une seconde clé secrète de session par $K_{s2} = puk_e.prk_{r2}$.

Sur réception du signal NACK, l'émetteur transmet en 350 une troisième version du paquet, $v_3$($P_1$), après l'avoir chiffrée à l'aide de la seconde clé secrète de session, $K_{s2}$. Cette troisième version est avantageusement constituée de symboles éliminés par la première et/ou la seconde étape de poinçonnage.

En outre, la seconde clé de session aura préalablement été calculée par l'émetteur au moyen de $K_{s2} = prk_e.puk_{r2}$.

Le récepteur déchiffre en 360 cette troisième version à l'aide de la seconde clé secrète de session, $K_{s2}$, et combine cette troisième version ainsi déchiffrée à la première et/ou à la seconde version stockée(s) pour obtenir une seconde version combinée, selon le même principe que précédemment. Le récepteur procède ensuite au décodage de la seconde version combinée.

Le processus de retransmission se poursuit jusqu'à ce que l'émetteur reçoive un accusé de réception positif, ACK, ou qu'un nombre maximal autorisé de versions successives du même paquet aient été transmises, ou encore que tous les symboles du paquet aient déjà été transmis.

Le changement de clé de session à chaque transmission d'une nouvelle version garantit un très haut degré de confidentialité sur la liaison.

En outre, le chiffrement par flot présente l'avantage de peu perturber le décodage canal. Les éventuelles erreurs de transmission sur le message chiffré se retrouvent sans amplification, c'est-à-dire sans augmentation sensible de leur nombre, dans le message en clair.

Comme précédemment, il est important de noter que les modes *« Go-Back-N ARQ »*, *« selective repeat ARQ »* et « N-Stop-and-Wait » peuvent être utilisés en combinaison avec le premier mode de réalisation de l'invention. Pour des raisons de concision mais sans préjudice de généralisation, seul le mode *selective repeat ARQ* sera décrit ci-après.

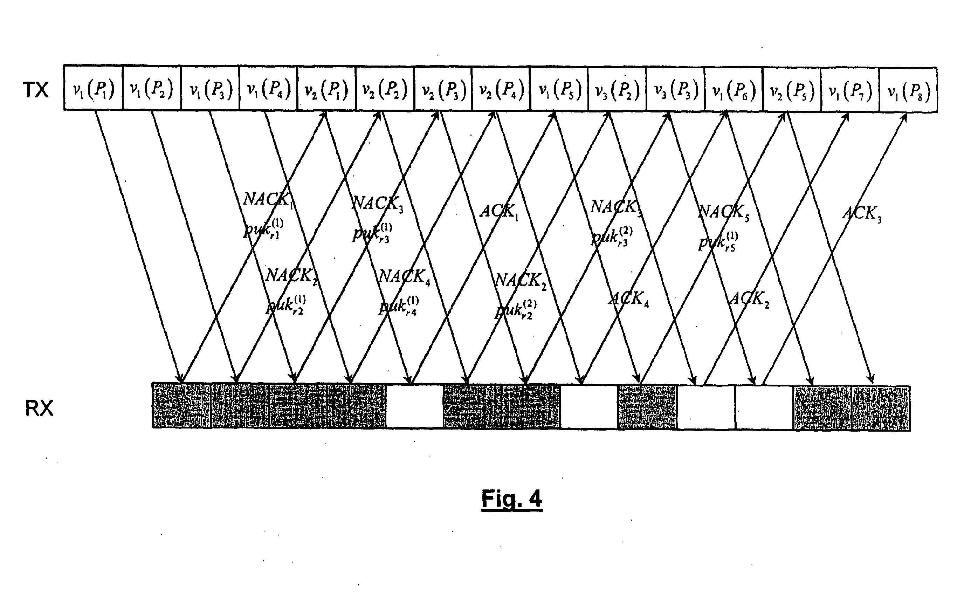

La Fig. 4 illustre schématiquement une méthode de transmission de paquets sécurisée, selon un second mode de réalisation de l'invention.

Ce mode de réalisation utilise un mode de retransmission *selective repeat ARQ* comme dans la seconde méthode et un chiffrement par flot comme dans le premier mode de réalisation.

On suppose que dans une étape préalable, par exemple lors de l'initialisation de la transmission, ou bien avant la transmission de la séquence des $N = 4$ paquets, l'émetteur a généré une paire de clés asymétriques ($puk_e,prk_e$) et transmis au récepteur la clé publique $puk_e$ de cette paire. Alternativement, cette clé publique peut être transmise en la concaténant avec les premières versions de paquets $v_1(P_1),v_1(P_2),v_1(P_3),v_1(P_4)$.

Comme dans la seconde méthode l'émetteur transmet des premières versions de paquets, $v_1(P_1),v_1(P_2),v_1(P_3),v_1(P_4)$ sans attendre de recevoir les accusés de réception correspondants. Les premières versions $v_1(P_1),v_1(P_2),v_1(P_3),v_1(P_4)$ n'étant pas décodables, le récepteur renvoie les accusés de réception négatifs $NACK_1,...,NACK_4$ à l'émetteur ainsi que les clés publiques $puk_{r1}^{(1)}$, $puk_{r2}^{(1)}$, $puk_{r3}^{(1)}$, $puk_{r4}^{(1)}$. Il calcule également les clés secrètes de session par

$$K_{si}^{(1)} = prk_{ri}^{(1)}.puk_e \text{ , } i = 1,..,4.$$

L'émetteur calcule alors ces mêmes clés secrètes de session au moyen de $K_{si}^{'(1)} = puk_{ri}^{(1)}.prk_e$ , $i =1,..,4$. L'émetteur reprend ensuite la transmission au début de la fenêtre temporelle avec la transmission des secondes versions $v_2(P_1),v_2(P_2),v_2(P_3),v_2(P_4)$, codées respectivement à l'aide des clés secrètes

$$K_{s1}^{(1)} \text{ , } K_{s2}^{(1)} \text{ , } K_{s3}^{(1)} \text{ , } K_{s4}^{(1)} \text{ ,}$$ sans attendre les accusés de réception correspondants.

Le récepteur décode les secondes versions des paquets à l'aide des clés secrètes

$$K_{s1}^{(1)} \text{ , } K_{s2}^{(1)} \text{ , } K_{s3}^{(1)} \text{ , } K_{s4}^{(1)} \text{ ,}$$

déjà calculées. Pour chacun des quatre paquets, le récepteur combine ensuite les première et seconde versions et tente un nouveau décodage de la combinaison obtenue. Dans le cas illustré, le décodage se solde par un échec pour les paquets $P_2$ et $P_3$, et par un succès pour les paquets $P_1$ et $P_4$. Le récepteur renvoie par conséquent $ACK_1$, $NACK_2$ avec la nouvelle clé publique $puk_{r2}^{(2)}$, $NACK_3$ avec la nouvelle clé publique $puk_{r3}^{(2)}$, et $ACK_4$.

L'émetteur calcule alors les nouvelles clés secrètes de session $K_{s2}^{(2)} = puk_{r2}^{(2)}.prk_e$ et

$$K_{s3}^{(2)} = puk_{r3}^{(2)}.prk_e \text{ .}$$

De manière générale, lorsque l'émetteur reçoit un accusé de réception positif, il passe à un nouveau paquet et en transmet une première version. Ainsi, après $ACK_1$, l'émetteur transmet le paquet $P_5$ et après $ACK_4$, il transmet le paquet $P_6$.

A l'inverse, lorsque l'émetteur reçoit un accusé de réception négatif, il transmet à la volée une nouvelle version du paquet correspondant. Ainsi, après $NACK_2$, l'émetteur transmet une troisième version, $v_3(P_2)$ du paquet $P_2$, chiffrée à l'aide de la clé $K_{s2}^{'(2)}$ . De même, après $NACK_3$, l'émetteur transmet une troisième version du paquet, $v_3(P_3)$, chiffrée avec la clé $K_{s3}^{'(2)}$ .

Dans l'exemple illustré en Fig. 4, le récepteur génère un nouveau couple de clés asymétriques à chaque échec de décodage d'un paquet, pour obtenir une nouvelle clé secrète de session qui servira au chiffrement de la nouvelle version.

Toutefois, cette génération peut n'intervenir qu'après $Q$ échecs successifs. Par exemple, on pourra prendre $Q = N = 4$. Dans ce cas, on remarquera que les secondes versions des paquets sont chiffrées avec la même clé secrète de session. Le nombre $Q$ d'échecs entre deux générations de clés peut encore résulter d'un tirage aléatoire.

Enfin, l'émetteur peut mettre à jour régulièrement ou de manière aléatoire le couple de clés asymétriques ($puk_e,prk_e$). A chaque mise à jour, la nouvelle clé publique $puk_e$ est transmise au récepteur.

La génération des couples de clés asymétriques au niveau de l'émetteur et/ou du récepteur pourra se faire à l'aide d'un germe comme expliqué plus haut. Avantageusement, l'émetteur et le récepteur utiliseront des germes différents.

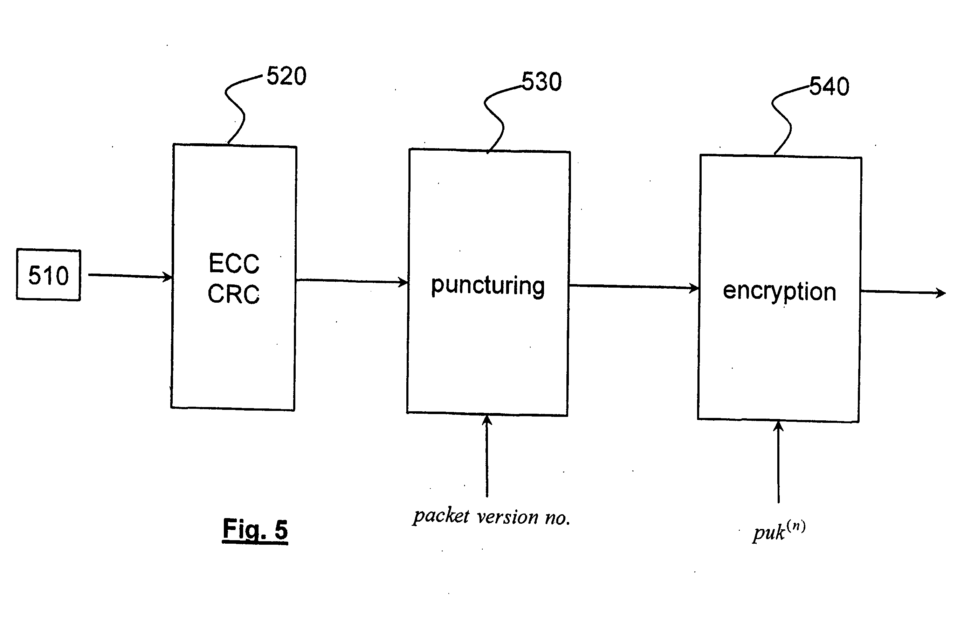

La Fig. 5 représente schématiquement la structure d'un émetteur permettant la mise en oeuvre de la première ou de la seconde méthode de transmission sécurisée.

L'émetteur comprend un codeur 510 codant les paquets 500 à l'aide d'un code correcteur d'erreur et, le cas échéant, d'un code de détection d'erreur. Le codeur correcteur d'erreur peut effectuer un codage par blocs, par exemple un codage de type Reed-Solomon ou BCH, un codage convolutif, un turbocodage parallèle ou série, ou encore un codage LDPC (*Low Density Parity Check code*).

Le poinçonneur 520 poinçonne le paquet ainsi codé avec différents taux de poinçonnage possibles. Le taux de poinçonnage est fonction du numéro de la version de paquet requis par le récepteur. Comme on l'a vu précédemment, la première version est poinçonnée avec un taux de poinçonnage élevé ne permettant pas le décodage au niveau du récepteur. Par exemple, si le codeur 510 utilise un codage systématique, le premier poinçonnage pourra éliminer tous les symboles systématiques. Pour les versions suivantes du paquet, deux variantes peuvent être envisagées.

Selon une première variante, le poinçonneur 520 ne fournit pour les versions suivantes d'un paquet (c'est-à-dire pour la première, seconde, etc. retransmissions) que des symboles qui ont été éliminés lors d'un poinçonnage antérieur. Par exemple, si le codeur 510 utilise un codage systématique, le poinçonneur pourra fournir dans les versions successives du paquet les symboles systématiques, puis des symboles de redondance éliminés lors de la première étape de poinçonnage. L'avantage de cette variante est de ne transmettre que des nouveaux symboles à chaque nouvelle retransmission.

Selon une seconde variante, le poinçonneur 520 fournit pour la seconde, troisième, etc. versions d'un paquet, des symboles éliminés lors d'un poinçonnage antérieur mais également des symboles qui étaient présents dans une version précédente de ce paquet. L'avantage de cette variante est de pouvoir permettre une combinaison de type *Chase combining,* et donc un décodage plus rapide du paquet en cas de faible rapport signal sur bruit.

La version de paquet fournie par le poinçonneur est ensuite chiffrée à l'aide d'une clé publique, notée ici $puk^{(n)}$. Celle-ci est transmise préalablement par le récepteur.

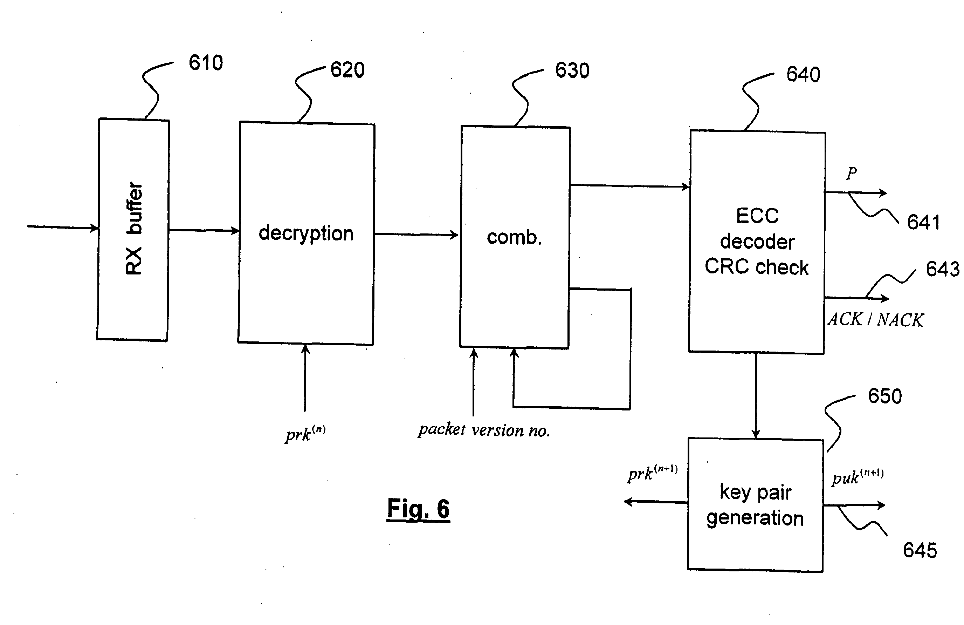

La Fig. 6 représente schématiquement la structure d'un récepteur permettant la mise en oeuvre de la première ou de la seconde méthode de transmission sécurisée.

Le récepteur comprend un buffer de réception 610, dans lequel sont stockés les paquets incidents. Le paquets sont déchiffrés par le module de déchiffrement 620, à l'aide de la clé privée, $prk^{(n)}$ associée à la clé publique $puk^{(n)}$.

La version du paquet ainsi déchiffrée est ensuite traitée par le module 630. Ce module effectue une combinaison de plusieurs versions disponibles d'un même paquet pour fournir une version combinée dans un buffer de combinaison (non représenté). Le module 630 substitue aux effacements les symboles reçus, au fur et à mesure qu'ils sont fournis par les versions successives d'un même paquet (dépoinçonnage). Le cas échéant, il additionne par exemple les valeurs souples d'un même symbole, lorsqu'il est présent dans différentes versions du paquet. Le module 630 reçoit une information de numéro de version de paquet (soit transmise dans l'entête de la version, soit obtenue par incrémentation d'un compteur) et en déduit les effacements à substituer et/ou les valeurs souples des symboles à sommer.

Les fonctions de sommation et de dépoinçonnage peuvent être exécutées par des entités distinctes ou non de ce module. La fonction de sommation ne sera pas implémentée si chaque nouvelle version contient de nouveaux symboles, absents des versions précédentes, autrement dit si chaque nouvelle version constitue un incrément de redondance. De manière générale, on comprendra que la combinaison comprend une étape de dépoinçonnage (des symboles reçus d'une nouvelle version complétant alors les symboles déjà disponibles dans le buffer de combinaison) et, le cas échéant, une étape d'addition (les valeurs souples de symboles d'une nouvelle version étant respectivement ajoutées à celles des symboles déjà présents dans le buffer de combinaison). Au terme de cette opération, le buffer de combinaison contient une version combinée du paquet.

La version combinée du paquet est ensuite décodée à l'aide du décodeur 640. Celui-ci indique si le paquet est décodable ou non. S'il est décodable, il fournit en 641 le paquet décodé, *P*, et transmet en 443, à l'émetteur, un accusé de réception positif, ACK. Dans le cas contraire, il transmet en 643 un accusé de réception négatif, NACK, et ordonne au module 650 de générer une nouvelle paire de clés publique et privée, notée ($puk^{(n+1)}$, $prk^{(n+1)}$). La clé privée est stockée au niveau du récepteur et la clé publique est transmise à l'émetteur en 645. De préférence, la clé privée est effacée dès lors que la ou les version(s) de paquet, chiffrée(s) à l'aide de la clé publique correspondante, a(ont) bien été reçue(s) et déchiffrée(s).

Enfin, on a vu que pour les *modes «Go-Back-N ARQ »*, « *selective repeat ARQ »* et « *N-Stop-and-Wait »*, *N* paquets sont reçus successivement et peuvent être traités indépendamment les uns des autres, en mode série et/ou parallèle. On peut prévoir dans ce cas plusieurs chaînes de traitement, par exemple *N* chaînes de traitement comme celle représentée en Fig. 6, le cas échéant partageant certains modules communs, au prix d'un multiplexage en entrée et/ou en sortie de ces modules.

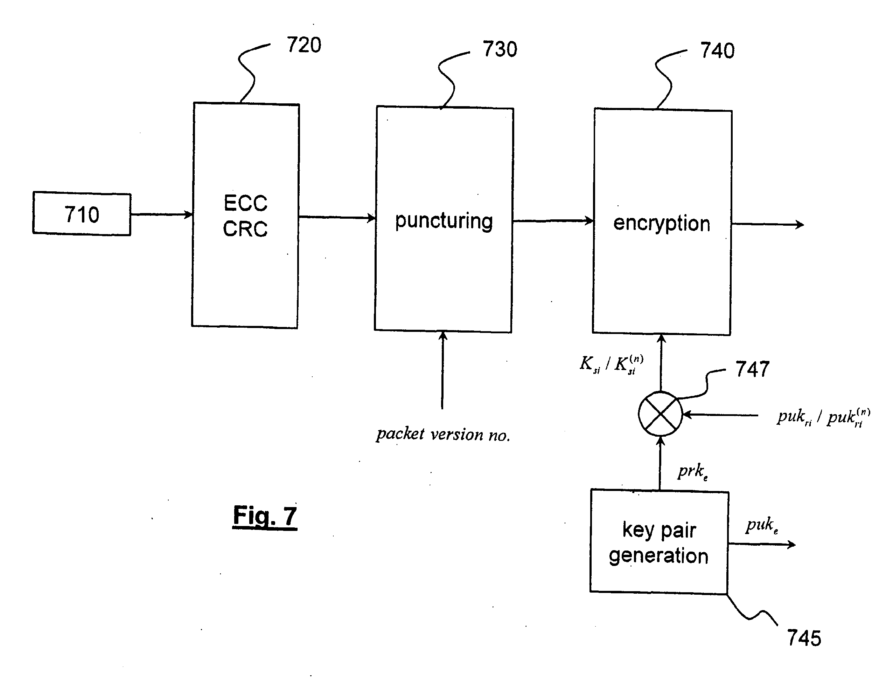

La Fig. 7 représente schématiquement la structure d'un émetteur permettant la mise en oeuvre de la méthode de transmission sécurisée selon le premier ou le second mode de réalisation de l'invention.

Les modules 710 à 740 sont respectivement identiques aux modules 510 à 540 de la Fig.5. A la différence de celle-ci cependant, l'émetteur comprend un générateur de couple clés asymétriques ($puk_e, prk_e$), 745. La clé publique, $puk_e$, est transmise au récepteur soit de manière indépendante, soit, par exemple, en la concaténant à une première version de paquet. La génération des clés en 745 se fait à un rythme sensiblement plus lent qu'au récepteur, par exemple à chaque initialisation. La clé secrète de session ($K_{si}$ pour le premier mode de réalisation, $K_{si}^{(n)}$ pour le second mode de réalisation) est obtenue en multipliant en 747 la clé privée de l'émetteur $prk_e$ avec la clé publique reçue du récepteur

($puk_{ri}$ ou $puk_{ri}^{(n)}$ selon le mode de réalisation).

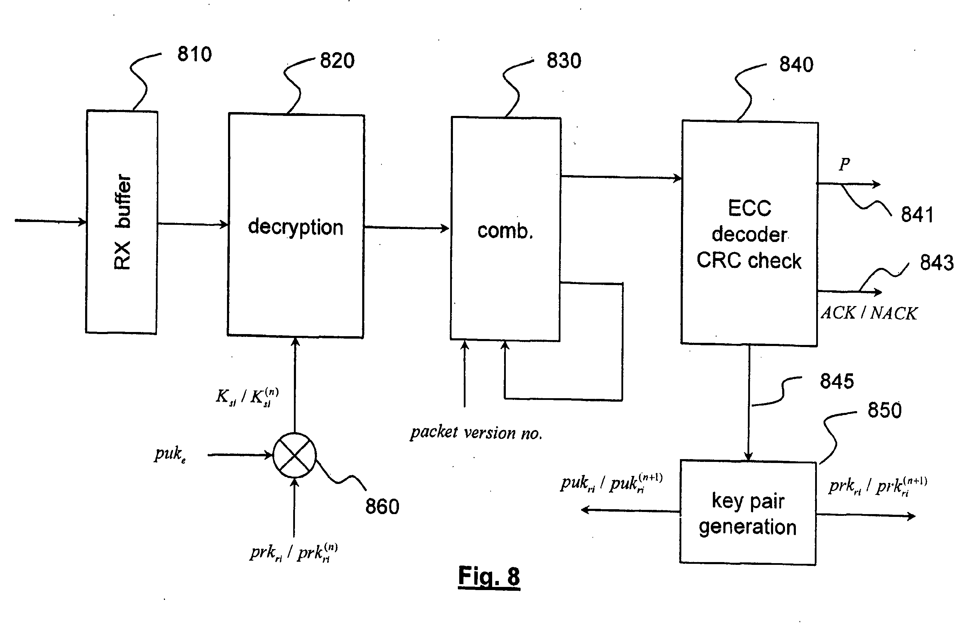

La Fig. 8 représente schématiquement la structure d'un récepteur permettant la mise en oeuvre de la méthode de transmission sécurisée selon le premier ou le second mode de réalisation de l'invention.

Les modules 810 à 840 sont respectivement identiques aux modules 610 à 640 de la Fig. 6. A la différence de celle-ci cependant, le récepteur calcule ici la clé secrète de session $K_{si}$ pour le premier mode de réa-

lisation, $K_{si}^{(n)}$ pour le second mode de réalisation) utilisée pour le déchiffrement, en multipliant en 860 la clé publique $puk_e$ reçue de l'émetteur avec la clé privée générée localement ($prk_{ri}$ ou $prk_{ri}^{(n)}$ selon le mode de réalisation).

Une nouvelle paire de clés asymétriques est générée automatiquement en 850 à chaque fois qu'un paquet n'est pas décodable (et qu'un accusé de réception négatif est envoyé) ou bien après $Q$ échecs successifs seulement.

**Revendications**

1. Méthode de transmission sécurisée de paquets de données sur une liaison sans fil entre un émetteur et un récepteur, **caractérisée en ce que** :

   - l'émetteur transmet (310) sur ladite liaison une première version d'un paquet de données ne permettant pas le décodage dudit paquet par le récepteur ;
   - suite à l'échec du décodage de la première version du paquet, le récepteur génère une première paire de clés constituée d'une première clé privée, dite première clé privée du récepteur et d'une première clé publique correspondante, dite première clé publique du récepteur et transmet (320) à l'émetteur ladite première clé publique du récepteur ;
   - l'émetteur génère une paire de clés constituée d'une clé privée, dite clé privée d'émetteur, et d'une clé publique correspondante, dite clé publique d'émetteur, transmet la clé publique d'émetteur au récepteur, effectue un chiffrement par flot pour chiffrer une seconde version dudit paquet, le chiffrement étant effectué au moyen d'une première clé de chiffrement, obtenue comme le produit de la clé privée d'émetteur et de la première clé publique du récepteur, et transmet la seconde version dudit paquet ainsi chiffrée sur ladite liaison ;
   - le récepteur déchiffre, à l'aide de ladite première clé de chiffrement obtenue comme le produit de la clé publique de l'émetteur avec la première clé privée du récepteur, la seconde version du paquet ainsi chiffrée, combine ladite première version et la seconde version, pour obtenir une première version combinée dudit paquet, et effectue (340) un décodage de la première version combinée ainsi obtenue.

2. Méthode de transmission selon la revendication 1, **caractérisée en ce que** si le décodage de la première version combinée échoue,

   le récepteur génère (340) une seconde paire de clés constituée d'une seconde clé privée, dite seconde clé privée du récepteur, et d'une seconde clé publique correspondante, dite seconde clé publique du récepteur, et transmet à l'émetteur ladite seconde clé publique du récepteur ;
   l'émetteur transmet (350) sur ladite liaison une troisième version dudit paquet, après l'avoir chiffrée au moyen d'un chiffrement par flot avec une seconde clé de chiffrement obtenue comme le produit de la clé privée de l'émetteur avec la seconde clé publique du récepteur.

3. Méthode de transmission selon la revendication 2, **caractérisée en ce que** le récepteur déchiffre (360) la troisième version du paquet à l'aide de ladite seconde clé de chiffrement obtenue comme le produit de la clé publique de l'émetteur avec la seconde clé privée du récepteur, combine la troisième version ainsi déchiffrée avec au moins la première ou la seconde version déchiffrée pour obtenir une seconde version combinée dudit paquet, et effectue un décodage de la seconde version combinée ainsi obtenue.

4. Méthode de transmission selon l'une des revendications précédentes, caractérisée en ce la première version du paquet est obtenue par codage de ce paquet au moyen d'un code de correction d'erreurs, suivi d'un premier poinçonnage du paquet ainsi encodé, avec un taux de poinçonnage excédant les capacités de correction dudit code.

5. Méthode de transmission selon la revendication 4, **caractérisée en ce que** la seconde version du paquet comprend des symboles ayant été éliminés par le premier poinçonnage du paquet encodé.

6. Méthode de transmission selon la revendication 5, **caractérisée en ce que** la seconde version du paquet est obtenue par un second poinçonnage du paquet encodé et que la troisième version du paquet comprend des symboles ayant été poinçonnés lors du premier et/ou du second poinçonnage(s).

7. Méthode de transmission selon la revendication 6, **caractérisée en ce que** le chiffrement de la seconde version du paquet est réalisé après le second poinçonnage.

8. Méthode de transmission selon l'une des revendications 4 à 7, **caractérisée en ce que** le codage du paquet est de type systématique, et que le premier poinçonnage élimine les symboles systématiques du paquet encodé.

9. Méthode de transmission selon la revendication 8, **caractérisée en ce qu'**elle met en oeuvre un protocole HARQ de type II.

**10.** Méthode de transmission selon la revendication 2, **caractérisée en ce que** les première et seconde clés privées du récepteur sont générées à partir d'un même germe.

**11.** Méthode de transmission selon la revendication 10, **caractérisée en ce que** le germe subit un traitement par une fonction non-inversible, le germe ainsi traité étant utilisé comme clé privée, la clé publique correspondante étant obtenue à partir de la clé privée au moyen d'un algorithme de cryptographie exploitant les propriétés des courbes elliptiques.

## Claims

**1.** A secure transmission method for data packet on a wireless link between a transmitter and a receiver, **characterised in that**:

- the transmitter transmits (310) on said link a first version of a data packet not enabling said packet to be decoded by the receiver;
- following the decoding failure of the first version of the packet, the receiver generates a first key pair consisting of a first private key, called first private key of the receiver and a corresponding first public key, called first public key of the receiver and transmits (320) to the transmitter said first public key of the receiver;
- the transmitter generates a key pair consisting of a private key, called the transmitter private key, and a corresponding public key, called the transmitter public key, transmits the transmitter public key to the receiver, performs a stream encryption for encrypting a second version of said packet, the encryption being performed by means of a first encryption key, obtained as the product of the transmitter private key and the first public key of the receiver, and transmits the second version of said packet thus encrypted on said link;
- the receiver decrypts, using said first encryption key obtained as the product of the transmitter public key with the first private key of the receiver, the second version of the packet thus encrypted, combines said first version and the second version, to obtain a first combined version of said packet, and performs (340) a decoding of the combined first version thus obtained.

**2.** The transmission method according to claim 1, **characterised in that** if the decoding of the combined first version fails,
then the receiver generates (340) a second key pair consisting of a second private key, called the second private key of the receiver, and a second corresponding public key, called the second public key of the receiver, and transmits to the transmitter said second public key of the receiver;
the transmitter transmits (350) on said link a third version of said packet, after it has encrypted it by means of a stream encryption with a second encryption key obtained as the product of the private key of the transmitter with the second private key of the receiver.

**3.** The transmission method according to claim 2, **characterised in that** the receiver decrypts (360) the third version of the packet using said second encryption key obtained as the product of the public key of the transmitter with the second private key of the receiver, combines the first version thus decrypted with at least the first or second version decrypted to obtain a second combined version of said packet, and performs a decoding of the combined second version thus obtained.

**4.** The transmission method according to one of the preceding claims, **characterised in that** the first version of the packet is obtained by coding this packet by means of an error correcting code, followed by a first puncturing of the packet thus encoded, with a puncturing rate exceeding the correcting abilities of said code.

**5.** The transmission method according to claim 4, **characterised in that** the second version of the packet comprises symbols that have been removed by the first puncturing of the encoded packet.

**6.** The transmission method according to claim 5, **characterised in that** the second version of the packet is obtained by a second puncturing of the encoded packet and the third version of the packet comprises symbols that have been punctured during the first and/or second puncturing(s).

**7.** The transmission method according to claim 6, **characterised in that** the encryption of the second version of the packet is performed after the second puncturing.

**8.** The transmission method according to one of claims 4 to 7, **characterised in that** the encoding of the packet is of the systematic type, and the first puncturing removes the systematic symbols of the encoded packet.

**9.** The transmission method according to claim 8, **characterised in that** it implements a type II HARQ protocol.

**10.** The transmission method according to claim 2, **characterised in that** the first and second private keys of the receiver are generated from a same germ.

11. The transmission method according to claim 10, **characterised in that** the germ undergoes a processing by a non-invertible function, the germ thus processed being used as a private key, the corresponding public key being obtained from the private key by means of a cryptography algorithm exploiting the properties of elliptical curves.

**Patentansprüche**

1. Verfahren zur gesicherten Übertragung von Datenpaketen auf einer drahtlosen Verbindung zwischen einem Sender und einem Empfänger, **dadurch gekennzeichnet, dass**:

   - der Sender auf der Verbindung eine erste Version eines Datenpakets überträgt, die keine Decodierung des Pakets durch den Empfänger erlaubt;
   - der Empfänger nach der gescheiterten Decodierung der ersten Version des Pakets ein erstes Paar von Schlüsseln erzeugt, gebildet durch einen ersten privaten Schlüssel, genannt erster privater Schlüssel des Empfängers, und einen ersten entsprechenden öffentlichen Schlüssel, genannt erster öffentlicher Schlüssel des Empfängers, und an den Sender den ersten öffentlichen Schlüssel des Empfängers überträgt (320);
   - der Sender ein Paar von Schlüsseln erzeugt, gebildet durch einen privaten Schlüssel, genannt privater Schlüssel des Senders, und einen entsprechenden öffentlichen Schlüssel, genannt öffentlicher Schlüssel des Senders, den öffentlichen Schlüssel des Senders an den Empfänger überträgt, eine Stromchiffrierung zum Chiffrieren einer zweiten Version des Pakets durchführt, wobei die Chiffrierung mittels eines ersten Chiffrierschlüssels durchgeführt wird, der als das Produkt des privaten Schlüssels des Senders und des ersten öffentlichen Schlüssels des Empfängers erhalten wird, und die derart chiffrierte zweite Version des Pakets auf der Verbindung überträgt;
   - der Empfänger mit Hilfe des ersten Chiffrierschlüssels, der als das Produkt des öffentlichen Schlüssels des Senders mit dem ersten privaten Schlüssel des Empfängers erhalten wird, die derart chiffrierte zweite Version des Pakts dechiffriert, die erste Version und die zweite Version kombiniert, um eine erste kombinierte Version des Pakets zu erhalten, und eine Decodierung der derart erhaltenen kombinierten ersten Version durchführt (340).

2. Verfahren zur Übertragung nach Anspruch 1, **dadurch gekennzeichnet, dass** dann, wenn die Decodierung der ersten kombinierten Version scheitert, der Empfänger ein zweites Paar von Schlüsseln erzeugt (340), gebildet durch einen zweiten privaten Schlüssel, genannt zweiter privater Schlüssel des Empfängers, und einen entsprechenden zweiten öffentlichen Schlüssel, genannt zweiter öffentlicher Schlüssel des Empfängers, und den zweiten öffentlichen Schlüssel des Empfängers an den Sender überträgt;
der Sender auf der Verbindung eine dritte Version des Pakets überträgt (350), nachdem er es mit Hilfe einer Stromchiffrierung mit einem zweiten Chiffrierschlüssel chiffriert hat, der als das Produkt des privaten Schlüssels des Senders mit dem zweiten öffentlichen Schlüssel des Empfängers erhalten wird.

3. Verfahren zur Übertragung nach Anspruch 2, **dadurch gekennzeichnet, dass** der Empfänger die dritte Version des Pakets mit Hilfe des zweiten Chiffrierschlüssels dechiffriert (360), der als das Produkt des öffentlichen Schlüssels des Senders mit dem zweiten privaten Schlüssel des Empfängers erhalten wird, die derart dechiffrierte dritte Version wenigstens mit der ersten oder der zweiten dechiffrierten Version kombiniert, um eine zweite kombinierte Version des Pakets zu erhalten, und eine Decodierung der derart erhaltenen zweiten kombinierten Version durchführt.

4. Verfahren zur Übertragung nach einem der vorhergehenden Ansprüche, **dadurch gekennzeichnet, dass** die erste Version des Pakets erhalten wird durch Codierung dieses Pakets mittels eines Fehlerkorrekturcodes, gefolgt von einer ersten Stempelung des derart codierten Pakets mit einer Stempelrate, die die Korrekturkapazitäten des Codes übersteigt.

5. Verfahren zur Übertragung nach Anspruch 4, **dadurch gekennzeichnet, dass** die zweite Version des Pakets Symbole umfasst, die durch die erste Stempelung des codierten Pakets eliminiert worden sind.

6. Verfahren zur Übertragung nach Anspruch 5, **dadurch gekennzeichnet, dass** die zweite Version des Pakets erhalten wird durch eine zweite Stempelung des codierten Pakets, und dass die dritte Version des Pakets Symbole umfasst, die bei der ersten und/oder zweiten Stempelung gestempelt worden sind.

7. Verfahren zur Übertragung nach Anspruch 6, **dadurch gekennzeichnet, dass** die Chiffrierung der zweiten Version des Pakets nach der zweiten Stempelung durchgeführt wird.

8. Verfahren zur Übertragung nach einem der Ansprüche 4 - 7, **dadurch gekennzeichnet, dass** die Codierung des Pakets vom systematischen Typ ist, und dass die erste Stempelung die systematischen Symbole des codierten Pakets eliminiert.

9. Verfahren zur Übertragung nach Anspruch 8, **dadurch gekennzeichnet, dass** es ein HARQ-Protokol vom Typ II verwendet.

10. Verfahren zur Übertragung nach Anspruch 2, **dadurch gekennzeichnet, dass** der erste und der zweite private Schlüssel des Empfängers ausgehend von ein und derselben Quelle erzeugt werden.

11. Verfahren zur Übertragung nach Anspruch 10, **dadurch gekennzeichnet, dass** die Quelle eine Verarbeitung mittels einer nicht-invertierbaren Funktion erfährt, wobei die derart verarbeitete Quelle als privater Schlüssel verwendet wird, wobei der entsprechende öffentliche Schlüssel erhalten wird ausgehend vom dem privaten Schlüssel mittels eines Kryptografiealgorhytmus, der die Eigenschaften elliptischer Kurven verwendet.

**Fig. 1**

EP 2 387 175 B1

TX

| $v_1(P_1)$ | $v_1(P_2)$ | $v_1(P_3)$ | $v_1(P_4)$ | $v_2(P_1)$ | $v_2(P_2)$ | $v_2(P_3)$ | $v_2(P_4)$ | $v_1(P_5)$ | $v_3(P_2)$ | $v_3(P_3)$ | $v_1(P_6)$ | $v_2(P_5)$ | $v_1(P_7)$ | $v_1(P_8)$ |

$NACK_1$    $puk_1^{(1)}$

$NACK_3$    $puk_3^{(1)}$

$ACK_1$

$NACK_3$    $puk_3^{(2)}$

$NACK_5$    $puk_5^{(1)}$

$ACK_3$

$NACK_2$    $puk_2^{(1)}$

$NACK_4$    $puk_4^{(1)}$

$NACK_2$    $puk_2^{(2)}$

$ACK_4$

$ACK_2$

RX

**Fig. 2**

TX

310 $v_1(P_1)$    330 $v_2(P_1)$    350 $v_3(P_1)$    370 $v_1(P_2)$

$puk_{e1}$

$NACK$ $puk_{r1}$    $NACK$ $puk_{r2}$    $ACK$    $NACK$ $puk_{r3}$

RX

320    340    360    380

$P_1$ non décodable    $P_1$ non décodable    $P_1$ décodable    $P_2$ non décodable

**Fig. 3**

EP 2 387 175 B1

TX

RX

**Fig. 4**

**Fig. 5**

EP 2 387 175 B1

**Fig. 6**

**Fig. 7**

**Fig. 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070112972 A

**Littérature non-brevet citée dans la description**

- **X. TANG et al.** On the throughput of secure hybrid-ARQ protocols for gaussian block-fading channels. *IEEE Trans. on Information Theory,* Avril 2009, vol. 5 (4), 1575-1591

- **M. ALABADDI et al.** Integrated security and error control for communication networks using McEliece cryptosystem. *Security Technology, 1992 Crime countermeasures, Proc. of EEE Int'l Carnahan Conf.,* 1992, 172-178